(19) **Europäisches Patentamt**
**European Patent Office**
**Office européen des brevets**

(11) **EP 2 554 619 B1**

(12) **EUROPEAN PATENT SPECIFICATION**

(45) Date of publication and mention
of the grant of the patent:
**11.04.2018 Bulletin 2018/15**

(51) Int Cl.:
**C09K 3/00** (2006.01)   **B01J 13/14** (2006.01)
**C08F 2/44** (2006.01)   **C08F 220/44** (2006.01)

(21) Application number: **11762467.6**

(22) Date of filing: **03.03.2011**

(86) International application number:
**PCT/JP2011/054879**

(87) International publication number:
**WO 2011/122227 (06.10.2011 Gazette 2011/40)**

(54) **THERMALLY EXPANDABLE MICROCAPSULE AND PROCESS FOR PRODUCTION OF THERMALLY EXPANDABLE MICROCAPSULE**

WÄRMEDEHNBARE MIKROKAPSEL UND VERFAHREN ZUR HERSTELLUNG EINER WÄRMEDEHNBAREN MIKROKAPSEL

MICROCAPSULE THERMIQUEMENT EXPANSIBLE ET PROCÉDÉ POUR LA PRODUCTION D'UNE MICROCAPSULE THERMIQUEMENT EXPANSIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 JP 2010083510**

(43) Date of publication of application:
**06.02.2013 Bulletin 2013/06**

(73) Proprietor: **Sekisui Chemical Co., Ltd.**
**Osaka 530-8565 (JP)**

(72) Inventors:
• **YAMAUCHI Hiroshi**
**Mishima-gun**
**Osaka 618-0021 (JP)**
• **MORITA Hiroyuki**
**Mishima-gun**
**Osaka 618-0021 (JP)**
• **NATSUI Hiroshi**
**Mishima-gun**
**Osaka 618-0021 (JP)**

(74) Representative: **Hart-Davis, Jason et al**
**Cabinet Beau de Loménie**
**158, rue de l'Université**
**75340 Paris Cedex 07 (FR)**

(56) References cited:
**EP-A1- 1 577 359       EP-A1- 1 952 881**
**WO-A1-2007/091960    WO-A1-2007/142593**
**JP-A- 2006 002 134    JP-A- 2009 221 429**
**JP-A- 2009 540 047**

• **DATABASE WPI Week 200938 Thomson Scientific, London, GB; AN 2009-J89592 XP002742472, -& JP 2009 120660 A (SEKISUI CHEM IND CO LTD) 4 June 2009 (2009-06-04)**
• **DATABASE WPI Week 200607 Thomson Scientific, London, GB; AN 2006-061389 XP002742473, -& JP 2006 002133 A (SEKISUI CHEM IND CO LTD) 5 January 2006 (2006-01-05)**
• **DATABASE WPI Week 200950 Thomson Scientific, London, GB; AN 2009-L73714 XP002742474, -& JP 2009 161698 A (SEKISUI CHEM IND CO LTD) 23 July 2009 (2009-07-23)**
• **DATABASE WPI Week 200962 Thomson Scientific, London, GB; AN 2009-N41401 XP002742475, -& JP 2009 203451 A (SEKISUI CHEM IND CO LTD) 10 September 2009 (2009-09-10)**
• **DATABASE WPI Week 200604 Thomson Scientific, London, GB; AN 2006-033552 XP002742476, -& JP 2005 343967 A (SEKISUI CHEM IND CO LTD) 15 December 2005 (2005-12-15)**

## Description

### TECHNICAL FIELD

The present invention relates to a thermally expandable microcapsule that is excellent in heat resistance and durability. The present invention also relates to a method for producing the thermally expandable microcapsule.

### BACKGROUND ART

Plastic foams are used for various applications because, in accordance with the materials and the foamed state of the plastic foams, various functions such as heat insulation, heat shielding, sound insulation, sound absorption, vibration proof, vibration damping, and weight saving can be expressed. An exemplary method for producing plastic foams include the steps of: molding a resin composition containing a foaming agent or foamable masterbatch and a matrix resin (e.g. thermoplastic resin) by a molding method such as injection molding and extrusion molding; and foaming the foaming agent by heat generated in molding.

For production of the plastic foams, thermally expandable microcapsules are used as a foaming agent, which includes thermoplastic shell polymers containing a volatile expansion agent that is gasified at a temperature lower than the softening point of the shell polymers. Such thermally expandable microcapsules are foamed by gasification of the volatile expansion agent and softening of the shell polymers by heating.

Patent Literature 1, for example, discloses a thermally expandable microcapsule having: an outer shell including polymers obtained by polymerization of a monomer mixture that contains a nitrile monomer (I), a monomer (II) having one unsaturated double bond and a carboxyl group in a molecule, a monomer (III) having two or more polymerizable double bonds in a molecule, and, if needed, a monomer (IV) different from and copolymerizable with the monomers (I), (II), and (III); and a foaming agent enclosed in the outer shell.

Patent Literature 1 teaches that the thermally expandable microcapsule disclosed therein stably foams in a high temperature range at a high expansion ratio and the resulting foam can serve as a highly elastic product.

However, conventional thermally expandable microcapsules as disclosed in Patent Literature 1 may have been soon deflated by outgassing of the volatile expansion agent and burst or shrinkage of shell polymers, which indicates such thermally expandable microcapsules are still insufficient in terms of the heat resistance and durability.

Patent Literature 2 discloses a thermally foamable microsphere. In the microsphere, an outer shell containing a foaming agent can be a copolymer having a polymethacrylimide structure, and monomers forming the polymethacrylimide structure by the copolymerization reaction are methacrylonitrile and methacrylic acid.

Patent Literature 2 teaches that the thermally foamable microsphere disclosed therein is excellent in heat resistance and stably foams at a high expansion ratio because the outer shell therein is a copolymer which can form a polymethacrylimide structure.

### CITATION LIST

Patent Literature

  Patent Literature 1: WO 03/099955
  Patent Literature 2: WO 07/072769

WO 2007/142593 A1 shows a thermally expandable microcapsule according to the preamble of claim 1.

### SUMMARY OF INVENTION

### TECHNICAL PROBLEMS

Patent Literature 2 teaches that the "polymethacrylimide structure" is obtainable by cyclization of a nitrile group and a carboxyl group by heating. However, in Patent Literature 2, the reactivity of monomers in a copolymerization reaction and that in a cyclization reaction are not sufficiently studied. Since application of copolymers which can form a polymethacrylimide structure to a thermally expandable microcapsule has been hardly tried, further investigation of the performance of a thermally expandable microcapsule to which such copolymers are applied may lead to improvement in the heat resistance and the durability of thermally expandable microcapsule.

The present invention aims to provide a thermally expandable microcapsule that is excellent in the heat resistance and the durability. The present invention further aims to provide a method for producing the thermally expandable microcapsule.

SOLUTION TO PROBLEM

The present invention is a thermally expandable microcapsule of claim 1.

Hereinafter, the present invention is specifically described.

The present inventors found out that, in a thermally expandable microcapsule having a shell containing a copolymer and a volatile liquid as a core agent included in the shell, use of a combination of predetermined methacrylic monomers as main components of monomers constituting the copolymer improves the heat resistance and the durability.

Namely, the present inventors found out that, in the thermally expandable microcapsule having a shell containing a copolymer and a volatile liquid as a core agent included in the shell, use of predetermined amounts of monomers A and B that are each at least one methacrylic monomer selected from a predetermined group and setting the total amount of methacrylonitrile and methacrylic acid within a predetermined range allow production of a thermally expandable microcapsule that is excellent in the heat resistance and the durability.

The thermally expandable microcapsule of the present invention includes a volatile liquid as a core agent in a shell containing a copolymer.

Such a configuration allows gasification of the core agent and softening and expansion of the shell by heat generated in molding of the thermally expandable microcapsule of the present invention mixed with a matrix resin, so that a foam molded article is produced.

The copolymer is obtainable by polymerization of a monomer mixture containing a monomer A and a monomer B, wherein the monomer A is at least one selected from the group consisting of a nitrile group-containing methacrylic monomer and an amide group-containing methacrylic monomer.

The methacrylic monomer herein refers to a monomer of a methacrylic acid derivative which has an olefinic double bond and is commonly used as a monomer for an acrylic copolymer. The acrylic monomer herein refers to a monomer of an acrylic acid derivative which has an olefinic double bond and is commonly used as a monomer for an acrylic copolymer. Accordingly, the methacrylic monomer and the acrylic monomer herein are distinguished from each other. The term "(meth)acryl" herein may refer to "acryl", "methacryl", or both "acryl" and "methacryl".

In the case where the thermally expandable microcapsule of the present invention is used in foam molding, use of the monomer mixture promotes a cyclization reaction between the functional groups contained in the monomer A and in the monomer B by heat generated in molding, so that the copolymer can form a polymethacrylimide structure. Here, the cyclization reaction between the functional groups contained in the monomer A and in the monomer B refers to a cyclization reaction between a nitrile group and a carboxyl group, a cyclization reaction between a nitrile group and an ester group, a cyclization reaction between an amide group and a carboxyl group, and a cyclization reaction between an amide group and an ester group.

Use of the monomer mixture allows the thermally expandable microcapsule of the present invention to be excellent in the heat resistance and the durability. The reason for this is presumably that the copolymer is likely to form a polymethacrylimide structure owing to high reactivity of the monomers A and B in the copolymerization reaction and high reactivity of functional groups contained in the monomers A and B in the cyclization reaction. In addition, high reactivity in a copolymerization reaction improves polymerization yield in production of the thermally expandable microcapsule of the present invention.

The monomer A is not particularly limited as long as it is at least one selected from the group consisting of a nitrile group-containing methacrylic monomer and an amide group-containing methacrylic monomer.

For example, use of the nitrile group-containing methacrylic monomer as the monomer A provides improvement in the heat resistance and the gas barrier property of an obtainable thermally expandable microcapsule. For another example, use of not the nitrile group-containing methacrylic monomer but the amide group-containing methacrylic monomer as the monomer A does not allow an obtainable thermally expandable microcapsule to contain a nitrile group even when a residual monomer is present, so that the thermally expandable microcapsule is excellent in safety and less likely to have an environmental influence.

The nitrile group-containing methacrylic monomer is not particularly limited, and examples thereof include methacrylonitrile. Each of these nitrile group-containing methacrylic monomers may be used alone, or two or more of them may be used in combination.

The amide group-containing methacrylic monomer is not particularly limited, and examples thereof include methacrylamide, an N-substituted methacrylamide, and an N,N-substituted methacrylamide. Each of these amide group-containing methacrylic monomers may be used alone, or two or more of these may be used in combination.

The N-substituted methacrylamide is not particularly limited, and examples thereof include N-isopropyl methacrylamide, N-methylol methacrylamide, N-methoxymethyl methacrylamide, N-ethoxymethyl methacrylamide, N-propoxymethyl methacrylamide, N-isopropoxymethyl methacrylamide, N-butoxymethyl methacrylamide, N-isobutoxymethyl methacrylamide, diacetone methacrylamide, and N,N-dimethylaminopropyl methacrylamide. In particular, N-methoxymethyl methacrylamide is preferable. Each of these N-substituted methacrylamides may be used alone, or two or more of these may be used in combination.

The N,N-substituted methacrylamide is not particularly limited, and examples thereof include N,N-dimethyl methacrylamide, N,N-diethyl methacrylamide, and methacryloylmorpholine. In particular, N,N-dimethyl methacrylamide is preferable. Each of these N,N-substituted methacrylamides may be used alone, or two or more of these may be used in combination.

A carboxyl group-containing methacrylic monomer herein includes methacrylic monomers containing metal salts of carboxyl groups, in addition to methacrylic monomers containing carboxyl groups. The carboxyl group-containing methacrylic monomer is not particularly limited, and examples thereof include methacrylic acid, and metal salts of these. Examples of the metal salt forms of the monomer include methacrylic acid metal salts such as magnesium methacrylate, calcium methacrylate, and zinc methacrylate. Each of these carboxyl group-containing methacrylic monomers may be used alone, or two or more of these may be used in combination.

For an ester group-containing methacrylic monomer, examples thereof include alkyl methacrylate esters. Each of these ester group-containing methacrylic monomers may be used alone, or two or more of these may be used in combination.

The ester group of the alkyl methacrylate ester in the thermally expandable microcapsule of the present invention used for foam molding is decomposed by heat generated in molding and generates a carboxyl group and a hydrocarbon. Such a carboxyl group can form a polymethacrylimide structure by a reaction with a nitrile group or amide group and the hydrocarbon functions to assist the core agent to improve the expansion ratio of the resulting thermally expandable microcapsule. Accordingly, use of the alkyl methacrylate ester may possibly realize a high expansion ratio even when the core agent is not used.

For an alkyl methacrylate ester, examples thereof include t-butyl methacrylate, isobutyl methacrylate, methyl methacrylate, and ethyl methacrylate. t-butyl methacrylate is preferable because it is easily decomposed to methacrylic acid by heat. Each of these alkyl methacrylate esters may be used alone, or two or more of these may be used in combination.

A combination of the monomer A and the monomer B is not particularly limited. Because of high reactivity in the cyclization reaction, the monomer A is preferably methacrylonitrile or methacrylamide and the monomer B is preferably methacrylic acid or t-butyl methacrylate.

The total amount of the methacrylonitrile and methacrylic acid in the monomer mixture is not more than 70% by weight. If the total amount of methacrylonitrile and methacrylic acid is more than 70% by weight, the reactivity of monomers in the copolymerization reaction between the monomer A and the monomer B is reduced, so that the resulting thermally expandable microcapsule has lowered heat resistance and durability. Additionally, lowered reactivity of monomers in the copolymerization reaction also lowers the polymerization yield in production of the thermally expandable microcapsule of the present invention. The total amount of the methacrylonitrile and methacrylic acid in the monomer mixture is preferably not more than 65% by weight and more preferably not more than 60% by weight.

The total amount of the monomers A and B accounts for 70% by weight or more of the monomer mixture. If the total amount of the monomers A and B is less than 70% by weight, the number of polymethacrylimide structures in the obtained copolymer is not enough. As a result, the obtained thermally expandable microcapsule has the lowered heat resistance and the lowered durability.

The lower limit of the total amount of the monomers A and B is preferably 80% by weight and more preferably 90% by weight of the monomer mixture.

The weight ratio of the monomer A and the monomer B is 5:5 to 9:1. If the weight ratio is out of the above range, the number of polymethacrylimide structures in the obtained copolymer is not enough. As a result, the obtained thermally expandable microcapsule has the lowered heat resistance and the durability. If the amount of the monomer B is larger than the above range, the monomer mixture has a too-high polarity. In such a case, when the monomer mixture is dispersed in an aqueous dispersion medium to be polymerized as described below, it cannot form stable droplets by emulsification so that a microcapsule structure cannot be obtained.

In the monomer mixture, the weight ratio of the monomers A and B is preferably 5:5 to 8:2 and more preferably 5:5 to 7:3.

In the case where the monomer mixture contains other monomer(s) other than the monomers A and B (hereinafter, also simply referred to as other monomer(s)), the other monomer(s) is/are not particularly limited and may be appropriately determined in accordance with the properties required of the resulting thermally expandable microcapsule. The other monomer(s) may be methacrylic or acrylic monomers.

Examples of the other monomers include acrylonitrile, acrylamide, acrylic acid, t-butyl acrylate, vinyl acetate, styrene, and vinylidene chloride.

Polymerization of the above monomer mixture provides a copolymer constituting the shell of the thermally expandable microcapsule of the present invention.

A polymerization initiator used for polymerization of the monomer mixture is not particularly limited, and examples thereof include dialkyl peroxides, diacyl peroxides, peroxy esters, peroxydicarbonates, and azo compounds. Each of these polymerization initiators may be used alone, or two or more of these may be used in combination.

The dialkyl peroxides are not particularly limited, and examples thereof include methylethyl peroxide, di-t-butyl peroxide, dicumyl peroxide, and isobutyl peroxide.

The diacyl peroxides are not particularly limited, and examples thereof include benzoyl peroxide, 2,4-dichloro benzoyl peroxide, and 3,5,5-trimethyl hexanoyl peroxide.

The peroxy esters are not particularly limited, and examples thereof include t-butyl peroxypivalate, t-hexyl peroxypivalate, t-butyl peroxyneodecanoate, t-hexyl peroxyneodecanoate, 1-cyclohexyl-1-methylethyl peroxyneodecanoate, 1,1,3,3-tetramethylbutyl peroxyneodecanoate, cumyl peroxyneodecanoate, and ($\alpha,\alpha$-bis-neodecanoyl per-oxy) diisopropyl benzene.

The peroxydicarbonates are not particularly limited, and examples thereof include bis(4-t-butylcyciohexyl)peroxydicarbonate, di-n-propyl-peroxydicarbonate, diisopropyl peroxydicarbonate, di(2-etyhletyhlperoxy)dicarbonate, dimethoxybutyl peroxydicarbonate, and di(3-methyl-3-methoxybutylperoxy)dicarbonate.

The azo compounds are not particularly limited, and examples thereof include 2,2'-azobisisobutyronitrile, 2,2'-azobis(4-methoxy-2,4-dimethylvaleronitrile), 2,2'-azobis(2,4-dimethylvaleronitrile), and 1,1'-azobis(1-cyclohexanecarbonitrile).

The amount of the polymerization initiator is not particularly limited, and the lower limit thereof is preferably 0.1 parts by weight and the upper limit thereof is preferably 5 parts by weight for 100 parts by weight of the monomer mixture. If the amount of the polymerization initiator is less than 0.1 parts by weight, the polymerization reaction of the monomer mixture does not progress sufficiently, so that the thermally expandable microcapsule excellent in the heat resistance and the durability cannot be obtained. If the amount of the polymerization initiator is more than 5 parts by weight, the polymerization reaction of the monomer mixture is rapidly initiated. This may cause occurrence of coagulation or a runaway reaction that brings safety issues.

The weight average molecular weight of the copolymer is not particularly limited, and the lower limit thereof is preferably 0.1 million and the upper limit thereof is preferably 10 million, more preferably 3 million. If the weight average molecular weight is less than 0.1 million, the resulting thermally expandable microcapsule may have a shell with lowered strength, so that the heat resistance and the durability thereof may be lowered. If the weight average molecular weight is more than 10 million, the resulting thermally expandable microcapsule may have a shell with extreme strength, so that the foaming property may be lowered.

The shell may contain a metal cation.

The metal cation included in the shell forms ionic crosslinks with the carboxyl group derived from the carboxyl group-containing methacrylic monomer, for example, and a crosslinking efficiency of the shell is improved to enhance the heat resistance.

Moreover, owing to the formation of the ionic crosslinks, the elasticity of the shell in the resulting thermally expandable microcapsule is less likely to be lowered even at high temperatures. Such a thermally expandable microcapsule in which the elasticity of the shell is less likely to be lowered even at high temperatures can foam at a high expansion ratio even in the case of being used in form molding by a molding method in which a strong shear force is applied, such as kneading molding, calendar molding, extrusion molding, and injection molding.

The metal cation is not particularly limited as long as it is a metal cation capable of forming ionic crosslinks with a carboxyl group derived from the carboxyl group-containing methacrylic monomer. Examples thereof include ions of elements such as Na, K, Li, Zn, Mg, Ca, Ba, Sr, Mn, Al, Ti, Ru, Fe, Ni, Cu, Cs, Sn, Cr, and Pb. Preferable among these are ions of Ca, Zn, and Al which are divalent or trivalent metal cations. Particularly preferable is Zn ion.

The metal cation is preferably added in a form of a metal cation hydroxide at the time of production of the thermally expandable microcapsule. Each of these metal cations may be used alone, or two or more of these may be used in combination.

In the case where two or more of the metal cations are used in combination, it is preferable to use an ion of an alkaline metal or alkaline earth metal, and a metal cation other than the alkaline metal or alkaline earth metal ion in combination. The alkaline metal or alkaline earth metal ion can activate functional groups such as a carboxyl group to promote ionic crosslinking between the functional group such as a carboxyl group and the metal cation other than the alkaline metal or alkaline earth metal ion.

The alkaline metal or alkaline earth metal is not particularly limited, and examples thereof include Na, K, Li, Ca, Ba, and Sr. Preferable among these are Na and K which are strongly basic materials.

In the case where the shell contains the metal cation, the amount of the metal cation in the shell is not particularly limited. The lower limit thereof is preferably 0.1% by weight and the upper limit thereof is preferably 5.0% by weight. If the amount of the metal cation is less than 0.1% by weight, an effect of improving the heat resistance of the resulting thermally expandable microcapsule may not be obtained sufficiently. If the amount of the metal cation is more than 5.0% by weight, the resulting thermally expandable microcapsule may not foam at a high expansion ratio.

If necessary, the shell may contain a stabilizer, an ultraviolet absorber, an antioxidant, an antistatic agent, a flame retardant, a silane coupling agent, a coloring agent, and the like.

The volatile liquid is not particularly limited, and a low-boiling organic solvent is preferably used. Specific examples thereof include: low molecular weight hydrocarbons such as ethane, ethylene, propane, propene, n-butane, isobutene, butene, isobutene, n-pentane, isopentane, neopentane, n-hexane, heptane, isooctane, nonane, decane, cyclohexane, and petroleum ether; chlorofluorocarbons such as $CCl_3F$, $CCl_2F_2$, $CClF_3$, and $CClF_2$-$CClF_2$; and tetraalkyl-silanes such as tetramethylsilane, trimethylethylsilane, trimethylisopropylesilane, trimethyl-n-propylsilane. In particular, isobutene, n-butane, n-pentane, isopentane, n-hexane, and petroleum ether are preferable as the resulting thermally expandable microcapsule foams rapidly and at a high expansion ratio. Each of these volatile liquids may be used alone, or two or more of these may be used in combination.

Moreover, a pyrolytic compound that is pyrolyzed to produce gas may be used as the volatile liquid.

The amount of the volatile liquid is not particularly limited, and the lower limit thereof is preferably 10% by weight and the upper limit thereof is preferably 25% by weight of the thermally expandable microcapsule of the present invention. If the amount is less than 10% by weight, the resulting thermally expandable microcapsule may have a too-thick shell so as not to foam unless the temperature is high. If the amount is more than 25% by weight, the resulting thermally expandable microcapsule may have a shell with lowered strength, failing to foam at a high expansion ratio.

The maximum foaming temperature (Tmax) of the thermally expandable microcapsule of the present invention is not particularly limited. The lower limit thereof is preferably 190°C. If the maximum foaming temperature (Tmax) is lower than 190°C, the thermally expandable microcapsule may have lowered heat resistance. In such a case, at high temperatures, the thermally expandable microcapsule may fail to foam at a high expansion ratio. In addition, if the maximum foaming temperature (Tmax) is lower than 190°C, in the case where a masterbatch pellet is produced from the thermally expandable microcapsule, for example, a shear force during the production of the pellet may problematically cause foaming, failing to stably produce an unfoamed masterbatch pellet. The lower limit of the maximum foaming temperature of the thermally expandable microcapsule is more preferably 200°C.

The maximum foaming temperature (Tmax) herein refers to a temperature at which the change of the diameter of the thermally expandable microcapsule reaches the maximum value in measurement of the thermally expandable microcapsule with heating from ambient temperature.

The volume average particle size of the thermally expandable microcapsule of the present invention is not particularly limited. The lower limit is preferably 10 $\mu$m and the upper limit is preferably 50 $\mu$m. If the volume average particle size is less than 10 $\mu$m, for example, in the case where the thermally expandable microcapsule is used in the foam molding, cells in the resulting foam molded article may be possibly too small, so that the weight saving is insufficient. If the volume average particle size is more than 50 $\mu$m, for example, in the case where the thermally expandable microcapsule is used in the foam molding, cells in an obtainable foam molded article may be too big, so that such an article has a problem in terms of the strength. The lower limit of the volume average particle size is more preferably 15 $\mu$m and the upper limit is more preferably 40 $\mu$m.

An application of the thermally expandable microcapsule of the present invention is not particularly limited. For example, the thermally expandable microcapsule may be added to a matrix resin. The mixture is molded by a molding method such as injection molding and extrusion molding. In this manner, a foam molded article is produced which provides heat insulation, heat shielding, sound insulation, sound absorption, vibration proof, and weight saving. The thermally expandable microcapsule of the present invention is excellent in the heat resistance and the durability, and therefore, it is suitably used in the foam molding that has a heating step at high temperatures.

In the case where the nitrile group-containing methacrylic monomer is not used and only the amide group-containing methacrylic monomer is used as the monomer A, the thermally expandable microcapsule of the present invention is excellent in safety and less likely to have an environmental influence. Moreover, in the case where the alkyl methacrylate ester is used as the monomer B, the thermally expandable microcapsule of the present invention can foam at a high expansion ratio, possibly realizing a high expansion ratio even when the core agent is not used.

A method for producing the thermally expandable microcapsule of the present invention is not particularly limited as long as it has a step of polymerizing the monomer mixture. The method for producing the thermally expandable microcapsule of the present invention is another aspect of the present invention.

An exemplary method for producing the thermally expandable microcapsule of the present invention preferably has the steps of: preparing an aqueous dispersion medium; dispersing an oily mixture containing the monomer mixture and the volatile liquid in the aqueous dispersion medium; and polymerizing the monomer mixture.

In the step of preparing an aqueous dispersion medium, for example, a polymerization reaction vessel is charged with water, a dispersion stabilizer, and an auxiliary stabilizer, if needed, so that an aqueous dispersion medium is prepared.

The dispersion stabilizer is not particularly limited, and examples thereof include silica such as colloidal silica, calcium phosphate, magnesium hydroxide, aluminum hydroxide, ferric hydroxide, barium sulfate, calcium sulfate, sodium sulfate, calcium oxalate, calcium carbonate, barium carbonate, and magnesium carbonate.

The amount of the dispersion stabilizer is not particularly limited, and may be appropriately determined in accordance with the average particle size of a target thermally expandable microcapsule.

In the case where colloidal silica is used as the dispersion stabilizer, for example, the lower limit of the amount of the dispersion stabilizer is preferably 1 part by weight and the upper limit is preferably 20 parts by weight for 100 parts by weight of all the monomer components in the monomer mixture. If the amount is less than 1 part by weight, the effect of the dispersion stabilizer is not sufficiently obtained, so that the thermally expandable microcapsule excellent in the heat resistance and the durability cannot be obtained. If the amount is more than 20 parts by weight, the dispersion stabilizer may not be attached to the surface of an oil drop of an oily mixture mentioned below or solid powder of an extra dispersion stabilizer may become a source of coagulation or an abnormal reaction. The lower limit of the amount of the dispersion stabilizer is more preferably 2 parts by weight and the upper limit is more preferably 10 parts by weight for 100 parts by weight of all the monomer components in the monomer mixture.

The auxiliary stabilizer is not particularly limited, and examples thereof include a condensation product of diethanol amine and aliphatic dicarboxylic acid, a condensation product of urea and formaldehyde, a water-soluble nitrogen-containing compound, polyethylene oxide, tetramethylammonium hydroxide, gelatin, methyl cellulose, polyvinyl alcohol, dioctyl sulfosuccinate, sorbitan esters, and various emulsifiers.

The water-soluble nitrogen-containing compound is not particularly limited, and examples thereof include polyvinyl pyrrolidone, polyethyleneimine, polyoxyethylene alkylamine, polyacrylamide, polycationic acrylamide, polyarninesulfone, and polyallyl amine. Moreover, examples thereof further include polydialkylaminoalkyl (meth)acrylates such as polydimethylaminoethyl methacrylate and polydimethylaminoethyl acrylate, and polydialkylaminoalkyl (meth)acrylamides such as polydimethylaminopropyl acrylamide and polydimethylaminopropyl methacrylamide. In particular, polyvinyl pyrrolidone is preferable among these.

In the case where the auxiliary stabilizer is added to the aqueous dispersion medium, the amount of the auxiliary stabilizer is not particularly limited, and may be appropriately determined in accordance with the average particle size of a target thermally expandable microcapsule.

For example, in the case where the condensation product or the water-soluble nitrogen-containing compound is used as the auxiliary stabilizer, the lower limit of the amount of the auxiliary stabilizer is preferably 0.05 parts by weight and the upper limit thereof is preferably 2 parts by weight for 100 parts by weight of all the monomer components in the monomer mixture.

The combination of the dispersion stabilizer and the auxiliary stabilizer is not particularly limited, and examples thereof include a combination of colloidal silica and a condensation product, a combination of colloidal silica and a water-soluble nitrogen-containing compound, and a combination of an emulsifier and one of magnesium hydroxide and calcium phosphate. In particular, the combination of colloidal silica and a condensation product is preferable among these. The condensation product is preferably a condensation product of diethanol amine and aliphatic dicarboxylic acid. Particularly preferable are a condensation product of diethanol amine and adipic acid and a condensation product of diethanol amine and itaconic acid.

The aqueous dispersion medium may further contain inorganic salts such as sodium chloride and sodium sulfate, if needed. Addition of such an inorganic salt provides thermally expandable microcapsules in which the particle shape is more uniform. In the case where the inorganic salt is added to the aqueous dispersion medium, the amount of the inorganic salt is not particularly limited, and the upper limit is preferably 100 parts by weight for 100 parts by weight of all the monomer components in the monomer mixture.

The pH of the aqueous dispersion medium may be appropriately determined in accordance with the kind of the dispersion stabilizer and the auxiliary stabilizer to be used.

In the case where silica such as colloidal silica is used as the dispersion stabilizer, for example, an acid such as hydrochloric acid is added, if needed, to adjust the pH of the aqueous dispersion medium to 3 to 4 and the step of polymerizing the monomer mixture is conducted under acidic conditions. In the case where magnesium hydroxide or calcium phosphate is used as the dispersion stabilizer, the aqueous dispersion medium is alkalified so that the step of polymerizing the monomer mixture is conducted under alkaline conditions.

In the step of dispersing an oily mixture containing the monomer mixture and the volatile liquid in the aqueous dispersion medium, the monomer mixture and the volatile liquid may be individually added to the aqueous dispersion medium so as to prepare the oily mixture in the aqueous dispersion medium. However, they are commonly preliminarily mixed to form an oily mixture before being added to the aqueous dispersion medium. In this case, the oily mixture and the aqueous dispersion medium may be separately prepared in different vessels, and then mixed with stirring in another vessel so that the oily mixture is dispersed in the aqueous dispersion medium. After that, the dispersion may be put into a polymerization reaction vessel.

A polymerization initiator is used to polymerize monomers in the monomer mixture. The polymerization initiator may be preliminarily added to the oily mixture or added after mixing of the aqueous dispersion medium and the oily mixture with stirring in a polymerization reaction vessel.

In the step where an oily mixture containing the monomer mixture and the volatile liquid is dispersed in the aqueous dispersion medium, the oily mixture is dispersed while being emulsified to have a predetermined particle size in the aqueous dispersion medium.

A method of emulsification/dispersion is not particularly limited, and examples thereof include a method of stirring the materials with a homomixer (a homomixer supplied by, for example, Tokushu Kika Kogyo Co., Ltd.) or the like, and a method of introducing the materials into a static dispersion machine such as a line mixer and an element-type static dispersion machine. The static dispersion machine may be individually charged with the aqueous dispersion medium and the oily mixture or charged with the dispersion preliminary prepared by mixing and stirring of the aqueous dispersion medium and the oily mixture.

In the step of polymerizing the monomer mixture, a polymerization method is not particularly limited. Examples thereof include polymerization of the monomer mixture by heating. This provides a thermally expandable microcapsule having a shell containing a copolymer and a volatile liquid included in the shell as a core agent. The obtained thermally expandable microcapsule may be subsequently subjected to dehydration and drying.

ADVANTAGEOUS EFFECTS OF INVENTION

The present invention provides a thermally expandable microcapsule that is excellent in the heat resistance and the durability. Moreover, the present invention also provides a method for producing the thermally expandable microcapsule.

DESCRIPTION OF EMBODIMENTS

The present invention is described in more detail with reference to Examples 2 to 4 and 7 in the following, Examples 1, 5, 6 and 8 being reference examples. The present invention is not limited only to these examples.

(Examples 1 to 8, Comparative Examples 1 to 8)

A polymerization reaction vessel was charged with water (250 parts by weight), and 20% by weight colloidal silica (20 parts by weight, Asahi Denka) and polyvinyl pyrrolidone (0.2 parts by weight, BASF) as dispersion stabilizers so that an aqueous dispersion medium was prepared. To the aqueous dispersion medium, an oily mixture containing monomers (100 parts by weight) at a blending ratio shown in Table 1 or 2, azobisisobutyronitrile (AIBN, 0.8 parts by weight) and 2,2'-azobis(2,4-dimethylvaleronitrile) (ADVN, 0.6 parts by weight) as polymerization initiators, and isopentane (20 parts by weight) and isooctane (10 parts by weight) as volatile liquids were added so that a dispersion liquid was prepared. The dispersion liquid was stirred with a homogenizer and placed in a nitrogen-substituted pressure polymerization vessel. The dispersion liquid was allowed to react for 24 hours at 70°C while being pressurized (0.5 MPa), so that a slurry was obtained. The slurry was filtered through a filter paper in suction filtration so that excessive water was removed. The residue was washed with pure water about twice the volume of the slurry to provide a wet cake. The resulting wet cake was dried for 24 hours in an oven at 50°C to give a thermally expandable microcapsule.

(Evaluation)

The thermally expandable microcapsules of examples and comparative examples were each evaluated as follows. Tables 1, and 2 show the results.

(1) Heat resistance, expansion ratio, and durability

The resulting thermally expandable microcapsules were each heated from ambient temperature to 280°C at a rate of 5°C/min with use of a heat foaming stage microscope (JAPAN HIGH TECH CO., LTD.). From any five images of the thermally expandable microcapsule, change of the average particle size was measured each time the temperature rises by 5°C. The maximum foaming temperature (Tmax) (°C) was measured and the heat resistance was evaluated based on the following criteria.

X: The maximum foaming temperature (Tmax) was lower than 180°C.
Δ: The maximum foaming temperature (Tmax) was not lower than 280°C and lower than 190°C.
○: The maximum foaming temperature (Tmax) was not lower than 190°C and lower than 200°C.
○○: The maximum foaming temperature (Tmax) was not lower than 200°C.

The ratio of the average particle size of the thermally expandable microcapsule at the maximum foaming temperature (Tmax) to that at 30°C herein was the expansion ratio at the maximum foaming temperature (Tmax).

X: The expansion ratio at the maximum foaming temperature (Tmax) was less than 3.0 times.

Δ: The expansion ratio at the maximum foaming temperature (Tmax) was not less than 3.0 times and less than 4.0 times.

○: The expansion ratio at the maximum foaming temperature (Tmax) was not less than 4.0 times and less than 5.0 times.

○○: The expansion ratio at the maximum foaming temperature (Tmax) was not less than 5.0 times.

The durability was evaluated by measuring ΔT1/2 that is herein a temperature width (half width) in which the expansion ratio is the half of the ratio at the maximum foaming temperature (Tmax) based on the following criteria.

X: ΔT1/2 was narrower than 30°C.

Δ: ΔT1/2 was not narrower than 30°C and narrower than 40°C.

○: ΔT1/2 was not narrower than 40°C and narrower than 50°C.

○○: T1/2 was not narrower than 50°C.

(2) Polymerization yield

The polymerization yield was calculated by the following formula and evaluated based on the following criteria.

```
Polymerization yield = (weight of the thermally
expandable microcapsule / weight of the oily mixture prior
to polymerization) × 100 (% by weight)
```

X: The polymerization yield was lower than 80% by weight.

Δ: The polymerization yield was not lower than 80% by weight and lower than 90% by weight.

○: The polymerization yield was not lower than 90% by weight.

[Table 1]

| | | | Monomer | | Total amount of A and B (% by weight) | A:B | Total amount of MAN and MAA (% by weight) | Heat resistance | | Expansion ratio | | Durability | | Polymerization yield | |
|---|---|---|---|---|---|---|---|---|---|---|---|---|---|---|---|
| | | | Kind | Parts by weight | | | | Tmax (°C) | Evaluation | Expansion ratio (times) | Evaluation | ΔT1/2 (C°) | Evaluation | Polymerization yield (% by weight) | Evaluation |
| Example 1 | Monomer A | Methacrylamide (MAm) | | 70 | 100 | 7.00:3.00 | 30 | 230 | ○○ | 4.3 | ○ | 40 | ○ | 95 | ○ |
| | Monomer B | Methacrvlic acid (MAA) | | 30 | | | | | | | | | | | |
| Example 2 | Monomer A | Methacrylamide (MAm) | | 70 | 100 | 7.00:3.00 | 0 | 192 | ○ | 5.2 | ○○ | 45 | ○ | 95 | ○ |
| | Monomer B | t-Butyl methacrylate (tBMA) | | 30 | | | | | | | | | | | |
| Example 3 | Monomer A | Methacrylonitrile (MAN) | | 70 | 100 | 7.00:3.00 | 70 | 191 | ○ | 6.2 | ○○ | 45 | ○ | 95 | ○ |
| | Monomer B | t-Butyl methacrylate (tBMA) | | 30 | | | | | | | | | | | |
| Example 4 | Monomer A | Mothacrylonitrile (MAN) | | 60 | 100 | 6.00:4.00 | 70 | 195 | ○ | 5.6 | ○○ | 50 | ○○ | 95 | ○ |
| | Monomer B | Methacrylic acid (MAA) | | 10 | | | | | | | | | | | |
| | | t-Butyl methacrylate (tBMA) | | 30 | | | | | | | | | | | |
| Example 5 | Monomer A | Methacrylonitrile (MAN) | | 50 | 100 | 5.00:5.00 | 70 | 215 | ○○ | 4.5 | ○ | 40 | ○ | 95 | ○ |
| | Monomer B | Methacrylic acid (MAA) | | 20 | | | | | | | | | | | |
| | | Methyl methacr-ylate (MMA) | | 30 | | | | | | | | | | | |

EP 2 554 619 B1

| | Monomer | | Parts by weight | Total amount of A and B (% by weight) | A:B | Total amount of MAN and MAA (% by weight) | Heat resistance | | Expansion ratio | | Durability | | Polymerization yield | |
|---|---|---|---|---|---|---|---|---|---|---|---|---|---|---|
| | | Kind | | | | | Tmax (°C) | Evaluation | Expansion ratio (times) | Evaluation | $\Delta T1/2$ (C°) | Evaluation | Polymerization yield (% by weight) | Evaluation |
| Example 6 | Monomer A | Methacrylonitrile (MAN) | 60 | 100 | 6.00:4.00 | 70 | 205 | ○○ | 4.8 | ○ | 55 | ○○ | 95 | ○ |
| | Monomer B | Methacrytic acid (MAA) | 10 | | | | | | | | | | | |
| | | Methyl methacrylate (MMA) | 30 | | | | | | | | | | | |
| Example 7 | Monomer A | Mothecrylonitrile (MAN) | 50 | 100 | 7.003.00 | 70 | 225 | ○○ | 4.1 | ○○ | 50 | ○○ | 95 | ○ |
| | | Methacrylamide (MAm) | 20 | | | | | | | | | | | |
| | Monomer B | Methacrylic acid (MAA) | 20 | | | | | | | | | | | |
| | | t-Butyl methacrylate (tBMA) | 10 | | | | | | | | | | | |
| Example 8 | Monomer A | Methacrylonitrile (MAN) | 50 | 70 | 7.142.86 | 70 | 212 | ○○ | 4.1 | ○ | 45 | ○ | 90 | ○ |
| | Monamer B | Methacrylic acid (MAA) | 30 | | | | | | | | | | | |
| | Other monomer | Acrylic acid (AA) | 30 | | | | | | | | | | | |

[Table 2]

| | | | Monomer | | Total amount of A and B (% by weight) | A:B | Total amount of MAN and MAA (% by weight) | Heat resistance | | Expansion ratio | | Durability | | Polymerization yield | |
|---|---|---|---|---|---|---|---|---|---|---|---|---|---|---|---|
| | | | Kind | Parts by weight. | | | | Tmax (°C) | Evaluation | Expansion ratio (times) | Evaluation | Δ1/2 (°C) | Evaluation | Polymerization yield (% by weight) | Evaluation |
| Comparative Example 1 | Monomer A | Methacrylonitrile (MAN) | | 22.4 | 76.2 | 2.94: 7.06 | 76.2 | 222 | ○○ | 2 | X | 16 | X | 85 | Δ |
| | Monomer B | Methacrylic acid (MAA) | | 53.8 | | | | | | | | | | | |
| | Other monomer | Ethylene glycol dimethacrylate (EGDMA) | | 1.3 | | | | | | | | | | | |
| | Other monomer | Acrylonitrile (AN) | | 22.4 | | | | | | | | | | | |
| Comparative Example 2 | Monomer A | Methacrylonitrile (MAN) | | 44 | 100 | 4.40: 5.60 | 100 | 225 | ○○ | 24 | X | 32 | Δ | 75 | X |
| | Monomer B | Methacrylonitrile (MAN) Methacrylic acid (MAA) | | 56 | | | | | | | | | | | |
| Comparative Example 3 | Monomer A | Methacrylonitrile (MAN) | | 40 | 40 | 10.00:0 | 40 | 178 | X | 4.2 | ○ | 24 | X | 95 | ○ |
| | Other monomer | Acrylonitrile (AN) | | 60 | | | | | | | | | | | |

EP 2 554 619 B1

| | Monomer | | | Total amount of A and B (% by weight) | A:B | Total amount of MAN and MAA (% by weight) | Heat resistance | | Expansion ratio | | Durability | | Polymerization yield | |
|---|---|---|---|---|---|---|---|---|---|---|---|---|---|---|
| | Kind | | Parts by weight. | | | | Tmax (°C) | Evaluation | Expansion ratio (times) | Evaluation | Δ1/2 (°C) | Evaluation | Polymerization yield (% by weight) | Evaluation |
| Comparative Example 4 | Monomer A | Methacrylonitrile (MAN) | 32.9 | 65.8 | 5.00: 5.00 | 65.8 | 218 | 00 | 3.2 | Δ | 35 | Δ | 85 | Δ |
| | Monomer B | Methacrylic acid (MAA) | 32.9 | | | | | | | | | | | |
| | Other monomer | Ethylene glycol dimethacrylate (EGDMA) | 1.3 | | | | | | | | | | | |
| | Other monomer | Acrylonitrile (AN) | 32.9 | | | | | | | | | | | |
| Comparative Example 5 | Monomer A | Methacrylonitrile (MAN) | 63.8 | 76.2 | 8.37: 1.63 | 76.2 | 177 | X | 4.1 | ○ | 22 | X | 80 | Δ |
| | Monomer B | Methacrylic acid (MAA) | 12.4 | | | | | | | | | | | |
| | Other monomer | Ethylene glycol dimethacrylate (EGDMA) | 1.3 | | | | | | | | | | | |
| | Other monomer | Acrylonitrile (AN) | 22.4 | | | | | | | | | | | |
| Comparative Example 6 | Monomer A | Methacrylonitrile (MAN) | 20 | 100 | 2.00: 8.00 | 70 | Not granulated | | | | | | | |
| | Monomer B | Methacrylic acid (MAA) | 50 | | | | | | | | | | | |
| | Monomer B | Methyl methacrylate (MMA) | 30 | | | | | | | | | | | |

(continued)

| | Monomer | | Parts by weight. | Total amount of A and B (% by weight) | A:B | Total amount of MAN and MAA (% by weight) | Heat resistance | | Expansion ratio | | Durability | | Polymerization yield | |
|---|---|---|---|---|---|---|---|---|---|---|---|---|---|---|
| | | Kind | | | | | Tmax (°C) | Evaluation | Expansion ratio (times) | Evaluation | Δ1/2 (°C) | Evaluation | Polymerization yield (% by weight) | Evaluation |
| Comparative Example 7 | Monomer B | Methacrylic acid (MAA) | 30 | 100 | 0.00: 10.00 | 30 | Not foamed | | | | | | | |
| | Monomer B | Methyl mothacrylate (MMA) | 70 | | | | | | | | | | | |
| Comparative Example 8 | Other monomer | Acrylonitrile (AN) | 100 | 0 | - | 0 | Not foamed | | | | | | | |

INDUSTRIAL APPLICABILITY

The present invention provides a thermally expandable microcapsule that is excellent in the heat resistance and the durability. The present invention also provides a method for producing the thermally expandable microcapsule.

**Claims**

1.   A thermally expandable microcapsule,
which comprises a shell containing a copolymer, and a volatile liquid as a core agent included in the shell,
the copolymer being obtainable by polymerization of a monomer mixture containing a monomer A and a monomer B,
the monomer A being at least one selected from the group consisting of a nitrile group-containing methacrylic monomer and an amide group-containing methacrylic monomer,
the monomer B being at least one selected from the group consisting of methacrylic acid and an alkyl methacrylate ester,
a total amount of the monomer A and the monomer B accounting for 70% by weight or more of the monomer mixture,
a weight ratio of the monomer A and the monomer B being 5:5 to 9:1, and
the monomer mixture containing methacrylonitrile and methacrylic acid in a total amount of not more than 70% by weight of the monomer mixture,

**characterized in that** the monomer B comprises the alkyl methacrylate ester which is t-butyl methacrylate.

2.   The thermally expandable microcapsule according to Claim 1,
wherein the nitrile group-containing methacrylic monomer is methacrylonitrile and the amide group-containing methacrylic monomer is at least one selected from the group consisting of methacrylamide, an N-substituted methacrylamide, and an N,N-substituted methacrylamide.

3.   The thermally expandable microcapsule according to Claim 2,
wherein the N-substituted methacrylamide is at least one selected from the group consisting of N-isopropyl methacrylamide, N-methylol methacrylamide, N-methoxymethyl methacrylamide, N-ethoxymethyl methacrylamide, N-propoxymethyl methacrylamide, N-isopropoxymethyl methacrylamide, N-butoxymethyl methacrylamide, N-isobutoxymethyl methacrylamide, diacetone methacrylamide, and N,N-dimethylaminopropyl methacrylamide, and the N,N-substituted methacrylamide is at least one selected from the group consisting of N,N-dimethyl methacrylamide, N,N-diethyl methacrylamide, and methacryloyl morpholine.

4.   The thermally expandable microcapsule according to Claim 1,
wherein the monomer A is methacrylonitrile or methacrylamide.

5.   A method for producing the thermally expandable microcapsule according to Claim 1, 2, 3 or 4, the method comprising the step of
polymerizing a monomer mixture containing said monomer A and said monomer B.

**Patentansprüche**

1.   Thermisch ausdehnbare Mikrokapsel,
die eine Hülle, die ein Copolymer enthält, und eine flüchtige Flüssigkeit als in der Hülle umfasstes Kernmittel umfasst,
wobei das Copolymer durch Polymerisation einer Monomermischung, die ein Monomer A und ein Monomer B enthält, erhältlich ist,
wobei das Monomer A wenigstens eines ist, das aus der aus einem nitrilgruppenhaltigen Methacrylmonomer und einem amidgruppenhaltigen Methacrylmonomer bestehenden Gruppe ausgewählt ist,
wobei das Monomer B wenigstens eines ist, das aus der aus Methacrylsäure und einem Alkylmethacrylatester bestehenden Gruppe ausgewählt ist,
wobei ein Gesamtgewicht des Monomers A und des Monomers B 70 Gewichts-% oder mehr der Monomermischung ausmacht,
wobei ein Gewichtsverhältnis des Monomers A und des Monomers B 5:5 bis 9:1 beträgt und
die Monomermischung Methacrylnitril und Methacrylsäure in einer Gesamtmenge von nicht mehr als 70 Gewichts-% der Monomermischung enthält,

**dadurch gekennzeichnet, dass** das Monomer B den Alkylmethacrylatester umfasst, der t-Butylmethacrylat ist.

**2.** Thermisch ausdehnbare Mikrokapsel nach Anspruch 1,
wobei das nitrilgruppenhaltige Methacrylmonomer Methacrylnitril ist und das amidgruppenhaltige Methacrylmonomer wenigstens eines ist, das aus der aus Methacrylamid, einem N-substituierten Methacrylamid und einem N,N-substituierten Methacrylamid bestehenden Gruppe ausgewählt ist.

**3.** Thermisch ausdehnbare Mikrokapsel nach Anspruch 2,
wobei das N-substituierte Methacrylamid wenigstens eines ist, das aus der aus N-Isopropylmethacrylamid, N-Methylolmethacrylamid, N-Methoxymethylmethacrylamid, N-Ethoxymethylmethacrylamid, N-Propoxymethylmethacrylamid, N-Isopropoxymethylmethacrylamid, N-Butoxymethylmethacrylamid, N-Isobutoxymethylmethacrylamid, Diacetonmethacrylamid und N,N-Dimethylaminopropylmethacrylamid bestehenden Gruppe ausgewählt ist, und das N,N-substituierte Methacrylamid wenigstens eines ist, das aus der aus N,N-Dimethylmethacrylamid, N,N-Diethylmethacrylamid und Methacryloylmorpholin bestehenden Gruppe ausgewählt ist.

**4.** Thermisch ausdehnbare Mikrokapsel nach Anspruch 1,
wobei das Monomer A Methacrylnitril oder Methacrylamid ist.

**5.** Verfahren zum Herstellen der thermisch ausdehnbaren Mikrokapsel nach Anspruch 1, 2, 3 oder 4, wobei das Verfahren den Schritt des Polymerisierens einer Monomermischung umfasst, die das Monomer A und das Monomer B enthält.

## Revendications

**1.** Microcapsule thermiquement expansible,
qui comprend une enveloppe contenant un copolymère, et un liquide volatile comme un agent de noyau inclus dans l'enveloppe,
le copolymère pouvant être obtenu par polymérisation d'un mélange de monomères contenant un monomère A et un monomère B,
le monomère A étant au moins un choisi dans le groupe constitué d'un monomère méthacrylique contenant un groupe nitrile et d'un monomère méthacrylique contenant un groupe amide,
le monomère B étant au moins un choisi dans le groupe constitué d'acide méthacrylique et d'un ester de méthacrylate d'alkyle,
une quantité totale du monomère A et du monomère B comptant pour 70 % en masse ou plus du mélange de monomères,
un rapport massique du monomère A et du monomère B étant de 5:5 à 9:1, et
le mélange de monomères contenant du méthacrylonitrile et de l'acide méthacrylique dans une quantité totale d'au plus 70 % en masse du mélange de monomères,
**caractérisée en ce que** le monomère B comprend l'ester de méthacrylate d'alkyle qui est le méthacrylate de t-butyle.

**2.** Microcapsule thermiquement expansible selon la revendication 1,
dans laquelle le monomère méthacrylique contenant un groupe nitrile est le méthacrylonitrile et le monomère méthacrylique contenant un groupe amide est au moins un choisi dans le groupe constitué de méthacrylamide, d'un méthacrylamide N-substitué, et d'un méthacrylamide N,N-substitué.

**3.** Microcapsule thermiquement expansible selon la revendication 2,
dans laquelle le méthacrylamide N-substitué est au moins un choisi dans le groupe constitué de N-isopropylméthacrylamide, N-méthylolméthacrylamide, N-méthoxyméthylméthacrylamide, N-éthoxy-méthylméthacrylamide, N-propoxyméthylméthacrylamide, N-isopropoxy-méthylméthacrylamide, N-butoxyméthylméthacrylamide, N-isobutoxyméthylméthacrylamide, diacétone méthacrylamide, et N,N-diméthylamino-propylméthacrylamide, et le méthacrylamide N,N-substitué est au moins un choisi dans le groupe constitué de N,N-diméthylméthacrylamide, N,N-diéthylméthacrylamide, et méthacryloylmorpholine.

**4.** Microcapsule thermiquement expansible selon la revendication 1,
dans laquelle le monomère A est le méthacrylonitrile ou le méthacrylamide.

**5.** Procédé de production de la microcapsule thermiquement expansible selon la revendication 1, 2, 3 ou 4, le procédé comprenant l'étape de
polymérisation d'un mélange de monomères contenant ledit monomère A et ledit monomère B.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03099955 A
- WO 07072769 A
- WO 2007142593 A1